**Europäisches Patentamt**

**European Patent Office**

**Office européen des brevets**

(19)

(11) Veröffentlichungsnummer: **0 309 522**
**B1**

(12) **EUROPÄISCHE PATENTSCHRIFT**

(45) Veröffentlichungstag der Patentschrift: **27.12.90**

(51) Int. Cl.⁵: **F 16 L 33/02**

(21) Anmeldenummer: **88903156.3**

(22) Anmeldetag: **08.04.88**

(86) Internationale Anmeldenummer:
**PCT/AT88/00019**

(87) Internationale Veröffentlichungsnummer:
**WO 88/08098 20.10.88 Gazette 88/23**

(54) **BEFESTIGUNGSELEMENT.**

(30) Priorität: **10.04.87 AT 909/87**

(43) Veröffentlichungstag der Anmeldung:
**05.04.89 Patentblatt 89/14**

(45) Bekanntmachung des Hinweises auf die
Patenterteilung:
**27.12.90 Patentblatt 90/52**

(84) Benannte Vertragsstaaten:
**AT BE CH DE FR GB IT LI LU NL SE**

(56) Entgegenhaltungen:
**CH-A- 510 205**
**GB-A-1 231 757**
**US-A-2 865 070**

(73) Patentinhaber: **HENN, Klaus**
**St. Johann in Engstetten 48**
**A-3352 St. Peter in der Au (AT)**

(72) Erfinder: **HENN, Klaus**
**St. Johann in Engstetten 48**
**A-3352 St. Peter in der Au (AT)**

(74) Vertreter: **Kliment, Peter, Dipl.-Ing. Mag.-jur.**
**Singerstrasse 8/3/8**
**A-1010 Wien (AT)**

Courier Press, Leamington Spa, England.

**Beschreibung**

Die Erfindung bezieht sich auf ein Befestigungselement, insbesondere Rohrschelle, das aus mindestens einem Materialstreifen, vorzugsweise einem Blechstreifen, hergestellt ist, mit einer den bzw. die zu befestigenden Gegenstände umschlingenden biegsamen Zunge und einem mit dieser verbundenen Halteteil, in dem das freie Ende der Zunge eingeschoben und verankert ist, wobei das freie Ende der Zunge hakenförmig abgebogen und der Halteteil eine vom Verbindungsbereich der Zunge mit dem Halteteil distanzierte Einhakkante aufweist, mit der das hakenförmige Ende der Zunge verhakt wird, und daß zum Schließen des Befestigungselementes der Halteteil als Hebel wirkt.

Derartige Befestigungselemente wurden z.B. durch DE—A—28 45 871 bekannt. Bei dieser vorbekannten Lösung ist der Halteteil mit der Zunge über ein Gelenk verbunden und mehrteilig ausgebildet. Dabei befindet sich der Halteteil, der durch einen an einem Hebel angelenkten Haken gebildet ist, in der Schließstellung des Befestigungselementes in einer Übertotpunktlage.

Der Nachteil dieser Lösung liegt in deren relativ komplizierten und in der Herstellung aufwendigen Aufbau. Außerdem genügt es bei in Schließstellung befindlichem Halteteil, diesen ein wenig anzuheben, um das Befestigungselement zum Aufspringen zu bringen. Dies kann aber auch bei einer unbeabsichtigten Berührung des Hebels ohne weiteres geschehen.

Durch CH—A—510205 kennt man ein Befestigungselement mit einem zwei armigen in Bügel, der beim Schließen zusammenknickt.

Ziel der Erfindung ist es, die ganannten Nachteile zu vermeiden und ein Befestigungselement der eingangs erwähnten Art vorzuschlagen, das sich durch einen einfachen Aufbau auszeichnet und bei dem ein unbeansichtiges Öffnen weitgehend ausgeschlossen ist. Außerdem soll sich das Befestigungselement einfach sowohl aus Kunststoff, wie auch aus Metall, insbesondere aus Stahlblech herstellen lassen.

Erfindungsgemäß wird dies dadurch erreicht, daß der in einer senkrecht auf die Zunge gedachten Ebene liegende Halteteil in einem fixen Winkel, der verzugsweise 90° beträgt, von der Zunge absteht und daß der Halteteil mit mindestens einem Teil der Zunge einstückig ausgebildet ist.

Auf diese Weise ist es möglich, die Zunge nach dem Umschlingen der zu haltenden Gegenstände in den Halteteil einzuhaken und diesen danach niederzubiegen, wodurch die Zunge straff um die zu haltenden Gegenstände, gelegt wird un diese zusammenpreßt. Dies kann jedoch aufgrund der durch den Halteteil gegebenen Hebelwirkung mit relativ geringem Kraftaufwand seitens des Anwenders erfolgen. Dies ermöglicht auch die Anwendung der erfindungsgemäßen Befestigungselemente ohne jedwedes Werkzeug.

Außerdem kommt es beim Schließen des erfindungsgemäßen Befestigungselementes zu einer plastischen Verformung des Materials, die sich nur wieder mit einem entsprechenden Kraftaufwand rückgängig machen läßt, sodaß ein unbeabsichtiges Öffnen des Befestigungselementes ausgeschlossen ist.

Um ein sattes Anliegen der Zunge an den zu haltenden Gegenständen, z.B., Rohren od. dgl. über einen möglichst großen Winkelbereich zu gewährleisten, kann weiters vorgesehen sein, daß der Halteteil einen Durchbruch aufweist, dessen Breite die Breite des einzuschiebenden freien Endes der Zunge geringfügig übersteigt und der sich von der Stelle, wo die Zunge mit einem Knick in den Halteteil übergeht bis zur Einhakkante erstreckt, die an einem den Durchbruch überbrückenden Steg angeordnet ist.

Dadurch kann das in dem Halteteil eingehakte Ende der Zunge auch im Bereich des umgebogenen und auf der Zunge u.U. aufliegenden Halteteiles auf der Zunge bzw. auf den zu haltenden Gegenständen anliegen, wodurch sich ein fester und rutschsicherer Halt ergibt.

Um ein Zurückbiegen des Halteteiles unter dem Einfluß der auf die Zunge einwirkenden Zugkräfte zu verhindern, ohne deshalb separate Sicherungsmittel vorsehen zu müssen, kann weiters vorgesehen sein, daß der Halteteil in einem geringen Abstand vom Übergangsbereich zur Zunge eine Schwachstelle aufweist, die ein Abbiegen des Halteteils von Hand ermöglicht.

Durch diese Maßnahmen wird erreicht, daß, bei in Spannlage befindlichem, d.h. umgebogenem Halteteil, die Einhakstelle der Zunge näher an der Oberfläche der zu haltenden Gegenstände liegt als die Biegekante des Halteteiles, um die der mit der Zunge verhakte Abschnitt der Halteteiles abgebogen ist. Dadurch befindet sich der mit der Zunge verhakte Abschnitt des Halteteiles in dessen Spannstellung in einer Übertotpunktlage, wodurch ein Öffnen des Befestigungselementes aufgrund der durch dieses aufgebrachten Zugkräfte sicher vermieden wird.

In diesem Zusammenhang kann weiters vorgesehen werden, daß die sich parallel zur zwischen der Zunge und dem Halteteil vorgesehenen Knickkante erstreckende Schwachstelle im Bereich des Halteteiles durch U-förmig vom flachen Halteteil abstehende Schenkel desselben, die sich bis zur Knickkante mit der Zunge hin erstrecken, festgelegt ist, an deren von der Knickkante abgekehrten Seite gegebenenfalls eine Verdickung des Halteteiles vorgesehen ist. Durch die U-förmig abstehenden Schenkel wird dabei auf sehr einfache Weise eine eindeutige Festlegung der Biegekante im Halteteil erreicht.

In diesem Zusammenhang kann bei einem aus einem Blechstreifen hergestellten erfindungsgemäßen Befestigungselement weiters vorgesehen sein, daß die Verdickung des Halteteiles durch umgeschlagene Bereiche eines Blechzuschnittes gebildet sind. Derartige Verdickungen lassen sich besonders einfach herstellen.

Bei einem bevorzugten Ausführungsbeispiel der Erfindung ist vorgesehen, daß im Bereich der Übergangsstelle der Zunge in den Halteteil eine Verstärkung angeordnet ist, die einem Ausbiegen der Zunge in Richtung einer gestreckten Lage mit dem Halteteil einen erhöhten Widerstand entgegensetzt.

Bei einem aus einem Blechstreifen hergestellten Befestigungselement kann diese einfach dadurch sichergestellt werden, daß aus dem an der Knickstelle angrenzenden Bereich der Zunge Lappen ausgebogen sind, die den von der Zunge abgebogenen Halteteil umgreifen.

Das erfindungsgemäße Befestigungselement wird nach einer bevorzugten Ausführungsform aus Metall hergestellt, doch ist es durchaus auch möglich dieses aus Kunststoff herzustellen, wobei auch auf die ausgebogenen Schenkel zur Bestimmung der Biegekante im Bereich des Halteteiles verzichtet werden kann, da der gleiche Effekt auch durch eine im Abstand von der Verbindungsstelle der Zunge mit dem Halteteil angeordnete Schwächungszone der Materialstärke erzielt werden kann.

Nach einem weiteren bevorzugten Merkmal der Erfindung kann vorgesehen sein, daß die Zunge geteilt ausgebildet ist, wobei beide Teile der Zunge in deren einen Endbereichen seitlich deren beiden Längskanten abstehende und abgewinkelte Flügel aufweisen, die den jeweils anderen Teil der Zunge teilweise übergreifen und einer dieser Teile, vorzugsweise sägezahnförmig ausgebildete Zähne und der andere Teil der Zunge Vertiefungen oder Durchbrechungen zur Aufnahme dieser Zähne aufweist.

Auf diese Weise ist eine Anpassung der Länge der Zunge an die jeweiligen Erfordernisse auf einfache Weise möglich. Dadurch erübrigt sich auch die Herstellung einer großen Vielzahl von unterschiedliche Zungenlängen aufweisenden Befestigungselementen, wodurch auch die Lagerhaltung wesentlich vereinfacht wird.

Dabei kann weiters vorgesehen sein, daß der lichte Abstand zwischen jedem Teil der Zunge und dessen den anderen Teil übergreifenden Flügeln größer als die Dicke des übergriffenen Teiles der Zunge plus der freien Höhe der Zähne ist.

Dies ermöglicht eine Veränderung der Zungenlänge sowohl in Richtung Verkleinerung, als auch in Richtung Verlängerung, wobei dies in beliebiger Reihenfolge erfolgen kann.

Bei einer bevorzugten Ausführungsform der Erfindung kann weiters vorgesehen sein, daß die Zunge oder deren Teile Durchbrechungen zur Erhöhung deren Biegsamkeit aufweisen.

Die Erfindung wird nun anhand der Zeichnung näher erläutert. Dabei zeigen:

Fig. 1 einen Aufriß eines erfindungsgemäßen Befestigungselementes.

Fig. 2 und 3 Seitenrisse des erfindungsgemäßen Befestigungselementes.

Fig. 4 einen Grundriß eines erfindungsgemäßen Befestigungselementes.

Fig. 5 ein erfindungsgemäßes Befestigungselement im teilweise geschlossenen Zustand.

Fig. 6 einen Zuschnitt zur Herstellung eines erfindungsgemäßen Befestigungselementes.

Fig. 7 eine weitere Ausführungsform eines erfindungsgemäßen Befestigungselementes, bei dem die Zunge geteilt ausgebildet ist,

Fig. 8 und 9 Einzelteile des Befestigungselementes nach der Fig. 7, und

Fig. 10 einen Schnitt gemäß der Linie X—X in der Fig. 8 im vergrößerten Maßstab.

Ein erfindungsgemäßes Befestigungselement 1 weist eine mit einem Halteteil 25 verbundene Zunge 2 auf, deren freies Ende 3 hakenförmig aufgebogen ist.

Der Halteteil 25 weist einen Durchbruch 4 auf, der sich in den verbreiterten Bereich 5 der Zunge 2 hinein erstreckt, wobei dieser Durchbruch 4 im Bereich des Halteteiles 25 durch einen Steg 6 unterteilt ist, der gleichzeitig eine Einhakkante 7 für den Haken 3 der Zunge 2 aufweist.

Der Halteteil 25 ist mit der Zunge 2 einstückig ausgebildet, wobei der Halteteil mit der Zunge im gebrauchsfertigen Zustand einen Winkel von vorzugsweise 90° einschließt.

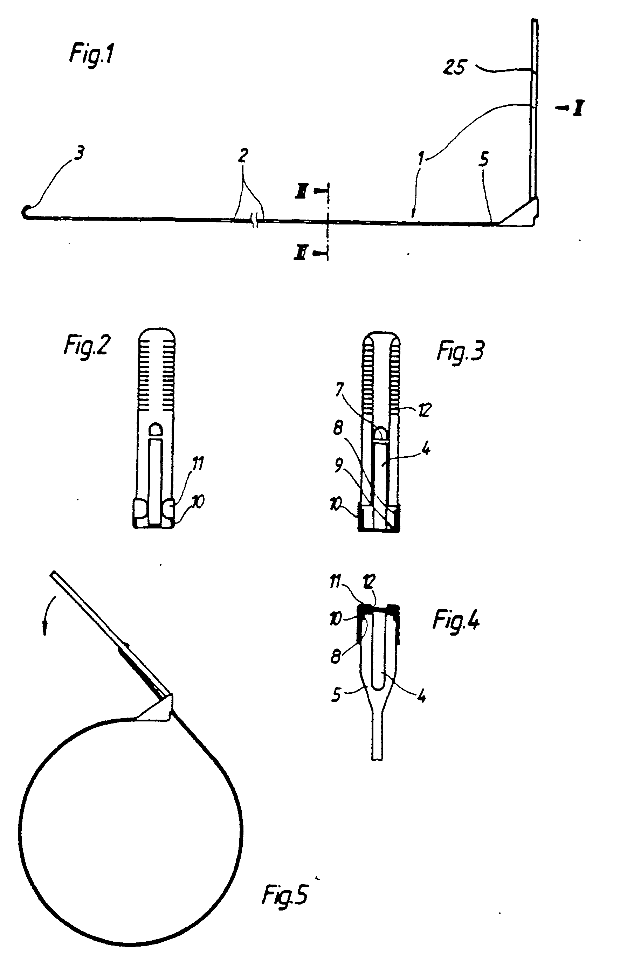

Wie aus den Fig. 3 und 4 ersichtlich ist, sind in dem an die Knickkante zwischen dem Halteteil und der Zunge unmittelbar anschließenden Bereich Schenkel 8 aus dem Halteteil 25 ausgebogen, die sich auf der Zunge 2 abstützen und ein weiteres Abbiegen des Halteteiles in der Knickkante 9 verhindern.

Aus der Zunge sind im Bereich der Knickkante 9 Lappen 10 ausgebogen, die auch den aufgebogenen Halteteil teilweise mit Fortsätzen 11 umgreifen. Diese Fortsätze 11 verhindern ein Ausbiegen der Zunge in Richtung des Halteteiles, sodaß diese Teile nicht in deren gestreckte Lage gebracht werden können.

Oberhalb der Schenkel 8 bzw. an deren von der Knickkante 9 abgekehrten Seite sind Flügel 12 des Halteteiles auf dessen Innenseite umgeschlagen, um einen verstärkten Bereich zu bilden. Dies führt auch dazu, daß sich zwischen den Schenkeln 8 und den durch die umgeschlagenen Flügel verstärkten Bereich eine parallel zu Knickkante verlaufende und von dieser distanzierte Schwachstelle im Halteteil ergibt, um die der den Steg 6 aufweisende Bereich des Halteteiles 25 abgebogen werden kann.

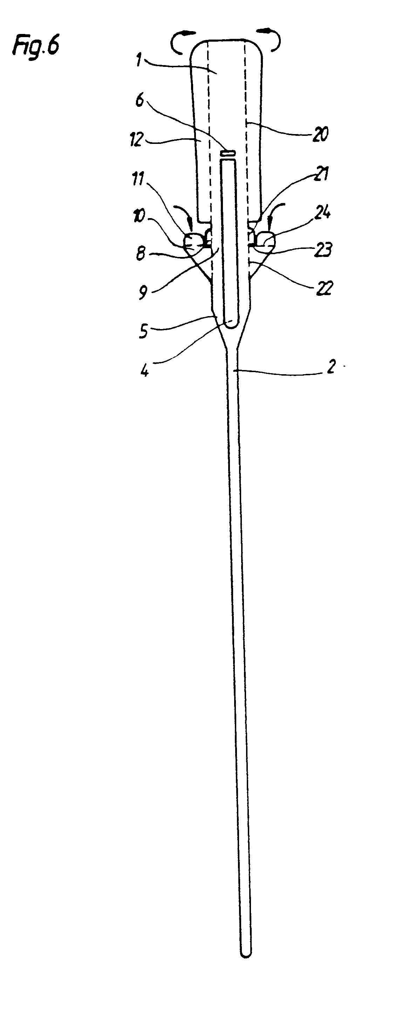

Wie aus Fig. 5 zu ersehen ist, wird der hakenförmige Endbereich 3 der Zunge 2 in den Steg 6 eingehängt, wonach der Halteteil 25 in Richtung auf den an den Halteteil anschließenden Bereich der Zunge niedergebogen werden kann. Dabei kommt er zum Spannen der Zunge, die sich mehr und mehr gegen die zu verbindenden bzw. zusammenzuhaltenden, nicht dargestellten Gegenstände, z.B. Rohre oder Stangen preßt.

Fig. 6 zeigt einen Zuschnitt zur Herstellung eines erfindungsgemäßen Befestigungselementes. Bei der Herstellung eines solchen Befestigungselementes werden die Schenkel 8 gemeinsam mit den Flügeln 12 entlang der strichliert gezeichneten Biegekanten 20, 21 aufgebogen, wonach die Flügel 12 weiter nach innen zu umgebogen und mit dem übrigen Halteteil zusammengepreßt werden. Dabei können auch Rillen eingeprägt werden, wodurch auch ein festeres Aneinanderpressen dieser Abschnitte möglich wird une eine Rückfederung vermieden wird.

Weiters werden auch die Lappen 10 der Zunge 2 entlang der Biegekanten 22 aufgebogen und der Halteteil 25 entlang der Verlängerung der beiden schmalen Einschnitte 23 aufgebogen bis die bereits aufgebogenen Schenkel auf der Zunge 2 aufstehen. Abschließend werden die Forsätze 11 der Lappen entlang der Biegekanten 24 um den abgewinkelten Halteteil herum gebogen und das freie Ende der Zunge 2 hakenförmig aufgebogen.

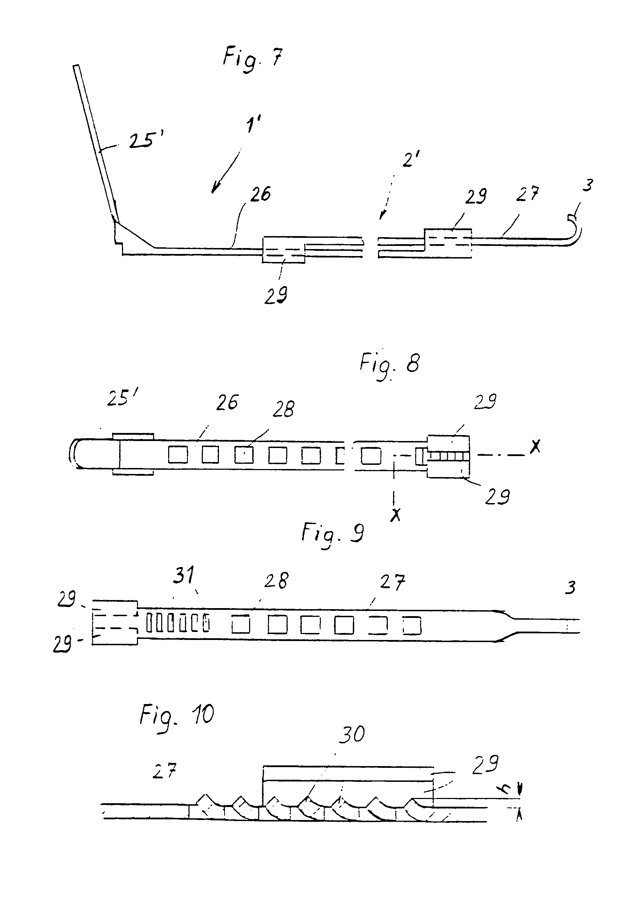

Fig. 7 zeigt eine weitere Ausführungsform eines erfindungsgemäßen Befestigungselementes 1'. Bei diesem ist die Zunge 2' geteilt ausgebildet, wodurch deren Länge in bestimmten Grenzen variiert werden kann. Weiters weist die Zunge 2' im wesentlichen die gleiche Breite wie der Halteteil 25' auf, der einstückig mit dem Teil 26 der Zunge 2' verbunden ist. Dieser Teil 26 weist ebenso, wie der Teil 27, der an seinem einen freien Ende 3 hakenförmig ausgebildet ist zur Verbesserung der Biegsamkeit Durchbrechungen 28 auf.

An den einen freien Enden der Teile 26 und 27 der Zunge 2', weisen diese an deren Längskanten angeordnete Flügel 29 auf (Fig. 8 und 9), die den jeweils anderen Teil 26, 27 der Zunge 2' übergreifen. Dadurch ergibt sich eine gegenseitige Führung der beiden Teile der Zunge 2'.

Wie insbesondere aus der Fig. 10 zu ersehen ist, sind im Bereich der Flügel 29 des Teiles 26 der Zunge 2', der mit dem Halteteil 25' einstückig verbunden ist, Zähne 30 angeordnet, die durch Ausstanzungen dieses Teiles gebildet sind und im wesentlichen eine sägezahnförmige Gestalt aufweisen.

Diese Zähne 30 wirken mit Durchbrechungen 31 zusammen, die über den gesamten Verstellbereich der Zunge 2' an dem Teil 27, dessen eine freie Ende 3 hakenförmig ausgebildet ist, angeordnet sind (Fig. 9).

Der lichte Abstand der Oberseite eines jeden Teiles 26, 27 der Zunge 2' von den dieser zugekehrten Seiten der Flügel 29 ist zumindest gleich der Dicke des jeweils anderen Teiles 26, 27 der Zunge 2', vermehrt um die aus dem Teil 26 der Zunge 2' vorragende Höhe h der Zähne 30. Dadurch können die beiden Teile 26, 27 der Zunge 2' wahlweise mehr oder weniger weit zur gegenseitigen Überdeckung gebracht werden, wobei eine Änderung in beiden Richtungen möglich ist.

Ist die Zunge über die zu befestigenden Gegenstände, z.B. Rohre gebogen, wobei der Teil 26 der Zunge 2' direkt an dem Rohr od. dgl. anliegt, so hat das die Flügel 29 aufweisende freie Ende dieses Teiles die Tendenz nach außen zu drängen, wodurch er zu einem sicheren Eingriff der Zähne 30 in die Durchbrüche 31 des Teiles 27 der Zunge 2' kommt. Durch die Anpressung des in Bezug auf die vom Befestigungselement 1' umschlungenen Gegenstände radial äußeren Teiles 27 der Zunge 2' beim Spannen mittels des Halteteiles 25', kommt es zu einer weiteren Verbesserung des Eingriffs der Zähne 30 in die Durchbrüche 31, wodurch ein aneinander Abgleiten der beiden Teile 26, 26' der Zunge 2' sicher verhindert wird.

Grundsätzlich ist es aber auch möglich, den lichten Abstand h der Innenseiten der Flügel 29 von der entsprechenden Oberseite der Teile 26, 27 so zu bemessen, daß bei Verkürzen der Länge der Zunge 2' durch ein entsprechendes gegenseitiges Verschieben der Teile 26, 27 es zu einem federnden Aufweiten des lichten Abstandes kommt. In diesem Falle beträgt dieser lichte Abstand weniger als die Summe der Dicke des jeweils anderen Teiles 26, 27 der Zunge 2' und der Höhe der Zähne h entspricht. Dabei können die Zähne an deren Vorder- und Rückseite eine unterschiedliche Neigung gegen die Oberseite des Teiles 26 aufweisen, um das Zusammenschieben der Teile 26 und 27 zu erleichtern. In einem solchen Falle ist dann allerdings nur mehr ein Verkürzen der Länge der Zunge 2', nicht aber eine anschließende Verlängerung derselben möglich.

**Patentansprüche**

1. Befestigungselement, insbesondere Rohrschelle, das aus mindestens einem Materialstreifen, vorzugsweise einem Blechstreifen, hergestellt ist, mit einer den bzw. die zu befestigenden Gegenstände umschlingenden biegsamen Zunge und einem mit dieser verbundenen Halteteil, in dem das freie Ende der Zunge eingeschoben und verankert ist, wobei das freie Ende der Zunge hakenförmig abgebogen und der Halteteil eine vom Verbindungsbereich der Zunge mit dem Halteteil distanzierte Einhakkante aufweist, mit der das hakenförmige Ende der Zunge verhakt wird, und daß zum Schließen des Befestigungselementes der Halteteil als Hebel wirkt, dadurch gekennzeichnet, daß der in einer senkrecht auf die Zunge gedachten Ebene liegende Halteteil (25) in einem fixen Winkel, der vorzugsweise 90° beträgt, von der Zunge (2) absteht und daß der Halteteil (25) mit mindestens einem Teil der Zunge (2) einstückig ausgebildet ist.

2. Befestigungselement nach Anspruch 1, dadurch gekennzeichnet, daß der Halteteil (25) einen Durchbruch (4) aufweist, dessen Breite die Breite des einzuschiebenden freien Endes der Zunge (2) geringfügig übersteigt und der sich von der Stelle (9), wo die Zunge mit einem Knick in den Halteteil (25) übergeht bis zur Einhakkante (7) erstreckt, die an einem den Durchbruch (4) überbrückenden Steg (6) angeordnet ist.

3. Befestigungselement nach einem der Ansprüche 1 oder 2, dadurch gekennzeichnet, daß der an den Übergangsbereich der Zunge (2) in den Halteteil (25) unmittelbar anschließende Bereich der Zunge (2) eine Verbreiterung (5) aufweist, in der sich der Durchbruch (4) des Halteteiles (25) fortsetzt.

4. Befestigungselement nach einem der Ansprüche 1 bis 3, dadurch gekennzeichnet, daß der Halteteil (25) in einem geringen Abstand vom Übergangsbereich zur Zunge (2) eine Schwachstelle aufweist, die ein Abbiegen des Halteteiles (25) von Hand ermöglicht.

5. Befestigungselement nach einem der Ansprüche 1 bis 4, dadurch gekennzeichnet, daß die sich parallel zu der zwischen der Zunge (2) und dem Halteteil (25) vorgesehen Knickkante (9) erstreckende Schwachstelle im Bereich des Halteteiles (25) durch U-förmig vom flachen Halteteil (25) abstehende Schenkel (8) desselben, die sich bis zur Knickkante (9) mit der Zunge (2) hin erstrecken, festgelegt ist, an deren von der Knickkante (9) angekehrten Seite eine Verdickung des Halteteiles (25) vorgesehen ist.

6. Befestigungselement nach einem der Ansprüche 1 bis 5, dadurch gekennzeichnet, daß die Verdickung des Halteteiles (25) durch umgeschlagene Bereiche bzw. Flügel (12) eines Blechzuschnittes gebildet sind.

7. Befestigungselement nach einem der Ansprüche 1 bis 6, dadurch gekennzeichnet, daß im Bereich der Übergangsstelle der Zunge (2) in den Halteteil (25) eine Verstärkung (10, 11), angeordnet ist, die einem Ausbiegen der Zunge (2) in Richtung einer gestreckten Lage mit dem Halteteil (25) einen erhöhten Widerstand entgegensetzt.

8. Befestigungselement nach einem der Ansprüche 1 bis 7, dadurch gekennzeichnet, daß aus dem an die Knickkante (9) angrenzenden Bereich der Zunge (2) Lappen (10) ausgebogen sind, die den von der Zunge (2) abgebogenen Halteteil (25) umgreifen.

9. Befestigungselement nach einem der Ansprüche 1 bis 8, dadurch gekennzeichnet, daß die Zunge (2') geteilt ausgebildet ist, wobei beide Teile der Zunge (2') in deren einen Endbereichen seitlich von deren beiden Längskanten abstehende und abgewinkelte Flügel (29) aufweisen, die den jeweils anderen Teil der Zunge (2') teilweise übergreifen und einer dieser Teile, sägezahnförmig ausgebildete Zähne (30) und der andere Teil der Zunge Vertiefungen oder Durchbrechungen (31) zur Aufnahme dieser Zähne (30) aufweist.

10. Befestigungselement nach Anspruch 9, dadurch gekennzeichnet, daß der lichte Abstand zwischen jedem Teil der Zunge (2') und dessen den anderen Teil übergreifenden Flügeln (29) größer als die Dicke des übergriffenen Teiles der Zunge (2') plus der freien Höhe (h) der Zähne (30) ist.

11. Befestigungselement nach einem der Ansprüche 1 bis 10, dadurch gekennzeichnet, daß die Zunge (2, 2') oder deren Teile (26, 27) Durchbrechungen (28) zur Erhöhung deren Biegsamkeit aufweisen.

**Revendications**

1. Elément de fixation, en particulier collier pour tuyaux, que est fabriqué d'au moins une bande de matériau, de préférence une bande de tôle, comprenant une languette flexible qui entoure l'objet ou les objets à fixer, ainsi qu'une partie de maintien reliée à elle et dans laquelle l'extrémité libre de la languette est introduite et ancrée, l'extrémité libre de la languette étant recourbée en forme de crochet et la partie de maintien présentant un bord d'accrochage situé à distance de la zone de liaison de la languette à la partie de maintien, bord sur lequel est accrochée l'extrémité en forme de crochet de la languette, et la partie de maintien agissant à la façon d'un levier pour la fermeture de l'élément de fixation, caractérisé en ce que la partie de maintien (25), située dans un plan fictif perpendiculaire à la languette, s'écarte de la languette (2) sous un angle fixe, qui est de préférence de 90°, et que la partie de maintien (25) est réalisée d'un seul tenant avec une partie au moins de la languette (2).

2. Elément de fixation selon la revendication 1, caractérisé en ce que la partie de maintien (25) présente une ouverture (4) dont la largeur est légèrement supérieure à la largeur de l'extrémité libre de la languette (2), laquelle est à introduire dans cette ouverture, l'ouverture s'étendant depuis l'endroit (9) où la languette se raccorde par un coude à la partie de maintien (25), jusqu'au bord d'accrochage (7), lequel est prévu sur une barrette (6) formant un pont en travers de l'ouverture (4).

3. Elément de fixation selon la revendication 1 ou 2, caractérisé en ce que le segment de languette (2) se raccordant directement à la zone de transition de la languette (2) à la partie de maintien (25), présente un élargissement (5) dans lequel se prolonge l'ouverture (4) de la partie de maintien (25).

4. Elément de fixation selon une des revendications 1 à 3, caractérisé en ce que la partie de maintien (25) présente, à une faible distance de la zone de transition avec la languette (2), un point faible qui permet de recourber la partie de maintien (25) à la main.

5. Elément de fixation selon une des revendications 1 à 4, caractérisé en ce que le point faible, situé dans la partie de maintien (25) et s'étendant parallèlement à l'arête (9) du coude prévu entre la languette (2) et la partie de maintien (25), est défini par des branches (8) qui dépassent à la façon de branches d'un U de la partie de maintien (25) plate, branches qui s'étendant jusqu'à l'arête (9) de coude avec la languette (2), avec prévision d'un épaississement de la partie de maintien (25) sur le côté des branches déloigné de l'arête (9) du coude.

6. Elément de fixation selon une des revendications 1 à 5, caractérisé en ce que l'épaississement de la partie de maintien (25) est formé par des portions ou ailes (12) repliées d'une découpe en tôle.

7. Elément de fixation selon une des revendications 1 à 1, caractérisé en ce qu'un renforcement (10, 11) est prévu dans la région de la partie de maintien (25) où se trouve le point de transition avec la languette (2), renforcement qui oppose une résistance accrue à la flexion de la languette (2) en direction de son orientation dans le prolongement de la partie de maintien (25).

8. Elément de fixation selon une des revendications 1 à 7, caractérisé en ce qu'il comprend des pattes (10) pliées hors du plan de la languette (2) dans la zone adjacente à l'arête (9) du coude, qui entourent la partie de maintien (25) pliée par rapport à la languette (2).

9. Elément de fixation selon une des revendications 1 à 8, caractérisé en ce que la languette (2') est devisée en deux parties présentant chacune, sur l'une des portions terminales, des ailes (29) dépassant latéralement des deux bords longitudinaux de la partie terminale et coudées, qui sont repliées en partie derrière l'autre partie de la languette (2'), et que l'une de ces parties de languette présente des dents (30) réalisées à la façon de dents de scie, tandis que l'autre partie de la languette présente des creux ou des alvéoles (31) pour la réception de ces dents (30).

10. Elément de fixation selon la revendication 9, caractérisé en ce que la distance libre entre chaque partie de la languette (2') et de ses ailes (29) repliées derrière l'autre partie, est plus grande que l'épaisseur de la partie entourée de la languette (2') plus la hauteur libre (h) des dents (30).

11. Elément de fixation selon une des revendications 1 à 10, caractérisé en ce que la languette (2, 2') ou ses parties (26, 27) présentent des alvéoles (28) pour augmenter leur flexibilité.

**Claims**

1. Fastening element, in particular a pipe clamp, produced from at least one strip of material, preferably a strip of sheet metal, and comprising a flexible tongue looping around one or serveral objects to be fastened and a holding part connected thereto, into which the free end of the tongue is inserted and anchored, whereby the free end of the tongue is bent off in form of a hook and the holding part has a hook-up edge distanced from the connecting area of the tongue with said holding part, said hook-up edge being used for being hooked up with the hook-like end of the tongue, and the holding part acts as a lever for closing the fastening element, characterized in that the holding part (25), lying in an imaginary vertical plane with regard to the tongue, protruded at a fixed angle, preferably being 90°, from the tongue (2) and that holding part (25) forms one single piece with at least one part of the tongue (2).

2. Fastening element in accordance with claim 1, characterized in that the holding part (25) comprises a breakthrough (4) the width of which slightly exceeds the width of the free end of the tongue (2) to be inserted and which extends from the place (9) where the tongue changes into the holding part (25) by means of a bend to the hook-up edge (7), said edge being arranged on a bridge (6) bridging the breakthrough (4).

3. Fastening element in accordance with one of claims 1 or 2, characterized in that the area of the tongue (2) ultimately following the transition area of the tongue (2) to the holding part (25) comprises a widening (5) in which breakthrough (4) of holding part (25) continues.

4. Fastening element in accordance with one of claims 1 to 3, characterized in that the holding part (25) comprises a weak point slightly spaced from the transition area of the tongue (2), said point allowing manual bending of the holding part (25).

5. Fastening element in accordance with one of claims 1 to 4, characterized in that the weak point extending parallel to the bending edge (9), said edge provided between tongue (2) and holding part (25), is fixed in the area of holding part (25) by U-shaped legs (8) projecting from the flat holding part (25), said legs extending up to the bending edge (8) with the tongue (2), and that on the side of said legs averting from bending edge (9) a thickening of holding part (25) is provided.

6. Fastening element in accordance with one of claims 1 to 5, characterized in that the thickening of holding part (25) is formed by areas or wings (12) of a cut piece of sheet metal.

7. Fastening element in accordance with one of claims 1 to 6, characterized in that in the transition area of the tongue (2) to the holding part (25) a reinforcement (10, 11) is arranged which produces an increased resistance to a deflection of the tongue (2) in the direction of a straightened position with the holding part (25).

8. Fastening element in accordance with one of claims 1 to 7, characterized in that from the area of the tongue (2) adjacent to the bending edge (9) flaps (10) are bent off, whereby said flaps encompass the holding part (25) bent down from the tongue (2).

9. Fastening element in accordance with one of claims 1 to 8, characterized in that the tongue (2') is divided, whereby both parts of said tongue (2') comprise, in their end sections, wings (29) projecting from both longitudinal edges and forming an angle, said wings in each case partly gripping across the other part of the tongue (2'), and that one of said parts comprises saw-tooth like teeth (39) and the other part comprises deepenings or breakthroughs (31) for accepting such teeth.

10. Fastening element in accordance with claim 9, characterized in that the clear distance between each part of the tongue (2') and its wings (29) gripping the other part is greater than the thickness of the overlapped part of the tongue (2') plus the free height (h) of the teeth (30).

11. Fastening element in accordance with one of claims 1 to 10, characterized in that the tongue (2, 2'), or parts thereof (26, 27), is provided with breakthroughs (28) for increasing its flexibility.

Fig.1

3

2

1

5

25

I

II

II

Fig.2

Fig.3

11

10

7

8

9

10

12

4

11

10

8

5

12

4

Fig.4

Fig.5

Fig.6

Fig. 7

Fig. 8

Fig. 9

Fig. 10